(19) Europäisches Patentamt
European Patent Office
Office européen des brevets

(11) **EP 4 137 463 B1**

(12) **EUROPEAN PATENT SPECIFICATION**

(45) Date of publication and mention of the grant of the patent:
**22.11.2023 Bulletin 2023/47**

(21) Application number: **21904627.3**

(22) Date of filing: **06.07.2021**

(51) International Patent Classification (IPC):
*C02F 1/461* (2023.01)

(52) Cooperative Patent Classification (CPC):
**C02F 1/4618;** C02F 2201/46115; C02F 2201/4613; C02F 2201/4614; C02F 2201/46145; C02F 2201/4617; C02F 2303/14; C02F 2303/22; Y02E 60/36

(86) International application number:
**PCT/JP2021/025508**

(87) International publication number:
**WO 2023/281634 (12.01.2023 Gazette 2023/02)**

(54) **ELECTROLYZED WATER GENERATOR AND METHOD FOR CONTROLLING ELECTROLYZED WATER GENERATOR**

ERZEUGER VON ELEKTROLYSIERTEM WASSER UND VERFAHREN ZUM STEUERN DES ERZEUGERS VON ELEKTROLYSIERTEM WASSER

GÉNÉRATEUR D'EAU ÉLECTROLYSÉE ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.02.2023 Bulletin 2023/08**

(73) Proprietor: **Enagic International Co., Ltd.**
**Chuo-ku**
**Tokyo 1040031 (JP)**

(72) Inventor: **OKUMURA, Kazuhiko**
**Tokyo 1040031 (JP)**

(74) Representative: **Keltie LLP**
**No. 1 London Bridge**
**London SE1 9BA (GB)**

(56) References cited:
**JP-A- H0 717 169       JP-A- H06 165 983**
**JP-A- H06 165 984       JP-A- H06 328 074**
**JP-A- H06 335 680       JP-A- H08 173 964**

**Description**

[Technical Field]

The present invention relates to an electrolyzed water generator and a method for controlling an electrolyzed water generator.

[Background Art]

The conventional electrolyzed water generator is an apparatus which is easily connectable to a water supply or well via a water flow pipe, and supplies cathode water (alkaline ionized water or reduced water) or anode water (acidic water) through electrolysis. The water from a water supply or well is purified in some cases with a water purification filter, such as activated carbon, before being introduced into the apparatus. The water purification filter is in some cases built in the apparatus. Hereinafter, the water introduced into the electrolyzed water generator is referred to as raw water.

[Citation List]

[Patent Literature]

[PTL 1] Japanese Patent Publication No. 3465367

[Summary of Invention]

[Technical Problem]

In the electrolyzed water generator, scale is formed in the electrolytic bath which is the heart of the apparatus. Such scale is removed by reverse polarity cleaning or chemical cleaning. The reverse polarity cleaning is a method of removing the scale built up on the electrode plate, by applying a voltage having a polarity opposite to that at the time of electrolysis. The scale cleaning is usually implemented at regular intervals. Therefore, over-cleaning or insufficient cleaning may occur, depending on the quality of raw water or the conditions of use. Especially for the reverse polarity cleaning, which involves a risk of damage or deterioration of the electrode plate, the optimization of the timing to implement the cleaning is desired. This applies to the chemical cleaning, for which the optimization of the timing to implement the cleaning is also desired.

The scale formed in the electrolyzed water generator is mainly composed of calcium carbonate ($CaCO_3$), which is widely known as being formed through a reaction between calcium ion $Ca^{2+}$ and carbonate ion $CO_3^{2-}$ contained in the raw water. Specifically, in addition to the calcium carbonate, magnesium carbonate ($MgCO_3$), magnesium hydroxide ($Mg(OH)_2$) and the like also deposit, but the content thereof is very small when using tap water and the like.

Patent Literature 1, with a focus on the calcium ions and magnesium ions which are the main components of scale, discloses converting the conductivity of water measured when the electrolyzed water generator is in use into the total hardness, based on the correlation between the total hardness and the conductivity of the raw water, thereby to optimize, for example, the time of implementing the reverse polarity cleaning. In this literature, however, the amount of the scale formed is determined indirectly from the hardness of the raw water during non-electrolysis, rather than from that during electrolysis. Therefore, the cleaning timing for removing the scale cannot be seen as having been optimized.

Needless to say, unless electrolysis is performed, scale is rarely formed in a short period of time neither from water with low hardness nor from water with high hardness. It is said that scale is likely to deposit under a high temperature condition, and also likely to deposit when the water is inclined to alkaline. Therefore, in the electrolyzed water generator, it is desired to clarify the scale formation directly from the phenomenon observed during electrolysis. Under such circumstances, one of the objectives of the present disclosure is to make it possible to perform cleaning of the electrolytic bath at an appropriate timing

JP H06 165983 A discloses an electrolyzed water generator with an electrolytic bath and a control unit that detects a cleaning time of the bath based on integrated values of current (i) applied to the electrolytic bath or integrated values of flow rate (f) through the bath (paragraph [20]). JP H06 165983 A also discloses that a combination of integrated values of current (i) and integrated values of flow rate (f) can be used to detect the optimum cleaning time.

JP H08 173964 A also relates to an electrolyzed water generator with an electrolytic bath and a control unit that detects a cleaning time of the bath by:

a. integrating the flow rate (f) through the bath,
b. when the flow rate exceeds a threshold value the actual current applied to the bath is compared with a reference current value and,

c. if the actual current deviates from the reference current value of a predetermined difference, a cleaning of the bath is prompted.

[Solution to Problem]

One aspect of the present disclosure relates to an electrolyzed water generator.

The electrolyzed water generator includes: at least a pair of an anode and a cathode; an electrolytic bath having an anode compartment and a cathode compartment separated from each other by a diaphragm, with the anode housed in the anode compartment, and the cathode housed in the cathode compartment; a power supply unit for allowing current to flow between the anode and the cathode; and a control unit for controlling the power supply unit, the control unit being configured to control the power supply unit so as to cause electrolysis of raw water introduced into the electrolytic bath, so that cathode water is produced in the cathode compartment and anode water is produced in the anode compartment, wherein the control unit detects a cleaning timing at which the electrolytic bath is cleaned, based on an integrated value of $C \cdot (i/f)$, where the C is a constant, given that a current applied during the electrolysis is denoted by i [A] and a flow rate of the raw water during the electrolysis is denoted by f [L/sec], and the control unit detects the cleaning timing when an absolute value of the integrated value reaches or exceeds a predetermined threshold.

Another aspect of the present disclosure relates to a method for controlling an electrolyzed water generator. The electrolyzed water generator includes at least a pair of an anode and a cathode, an electrolytic bath having an anode compartment and a cathode compartment separated from each other by a diaphragm, with the anode housed in the anode compartment, and the cathode housed in the cathode compartment, and a power supply unit for allowing current to flow between the anode and the cathode. The method includes steps of: (i) controlling the power supply unit so as to cause electrolysis of raw water introduced into the electrolytic bath, so that cathode water is produced in the cathode compartment and anode water is produced in the anode compartment; and (ii) detecting a cleaning timing at which the electrolytic bath is cleaned, based on an integrated value of $C \cdot (i/f)$, where the C is a constant, given that a current applied during the electrolysis is denoted by i [A] and a flow rate of the raw water during the electrolysis is denoted by f [L/sec]; wherein in the step of (ii), the cleaning timing is detected when an absolute value of the integrated value reaches or exceeds a predetermined threshold.

[Advantageous Effects of Invention]

According to the present disclosure, cleaning of the electrolytic bath can be performed at an appropriate timing.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic front view of an electrolyzed water generator of Embodiment 1.
[FIG. 2] A graph showing results of a measurement test in Embodiment 1.
[FIG. 3] A schematic front view of an electrolyzed water generator of Embodiment 2.
[FIG. 4] A flowchart of a method for controlling an electrolyzed water generator.
[FIG. 5] A graph showing results of a measurement test in Embodiment 2.
[FIG. 6] Photographs of cathode plates subjected to the test, of which (a) shows a cathode plate of Example 1 and (b) shows a cathode plate of Comparative Example 1.

[Description of Embodiments]

Embodiments of an electrolyzed water generator and a method for controlling an electrolyzed water generator according to the present disclosure will be described below by way of examples. It is to be noted, however, that the present disclosure is not limited to the examples described below and the scope of protection is defined in the appended claims.

In the description below, specific numerical values and materials are exemplified in some cases, but other numerical values and materials may be applied as long as the effects of the present disclosure can be achieved.

(Electrolyzed water generator)

An electrolyzed water generator according to the present disclosure includes at least a pair of an anode and a cathode, an electrolytic bath, a power supply unit, and a control unit.

The at least a pair of an anode and a cathode may be each composed of an electrode plate. A single pair of the anode and the cathode may be included, or a plurality of pairs of the anode and the cathode may be included.

The electrolytic bath has an anode compartment and a cathode compartment separated from each other by a diaphragm. The diaphragm is an ion permeable material, which may be, for example, a porous membrane, or an ion-exchange membrane. The anode is housed in the anode compartment. The cathode is housed in the cathode compartment. There is no limitation on the material and the structure of the anode and the cathode, and may be made of any known material, such as a metal and a carbon material. The number of the anode compartments may be the same as or different from the number of the anodes. The number of the cathode compartments may be the same as or different from the number of the cathodes. When a plurality of anodes are present, one or more anodes may be housed in each of a plurality of the anode compartments. When a plurality of cathodes are present, one or more cathodes may be housed in each of a plurality of the cathode compartments.

The power supply unit is an element for allowing current to flow between the anode and the cathode. The power supply unit may be configured to allow current to flow between the anode and the cathode, for example, by applying a DC voltage across the anode and the cathode.

The control unit is an element for controlling the power supply unit. The control unit is configured to control the power supply unit so as to cause electrolysis of raw water introduced into the electrolytic bath, so that cathode water is produced in the cathode compartment and anode water is produced in the anode compartment. The control unit may include an arithmetic device, and a storage device in which a program executable by the arithmetic device is stored. The program stored in the storage device may be a program for executing an electrolyzed water generator control method according to the present disclosure in a computer.

The control unit detects a cleaning timing at which the electrolytic bath is cleaned, based on an integrated value of C-(i/f), given that a current applied during the electrolysis is denoted by i [A] and a flow rate of the raw water during the electrolysis is denoted by f [L/sec]. Here, the C is a constant, which, for example, may be determined analytically and/or experimentally based on the specific configuration of the electrolyzed water generator.

The present inventor has found that by using the value of $C \cdot (i/f)$, the scale formation in the electrolyzed water generator can be directly clarified from the phenomenon observed during the electrolysis, and eventually, the timing of cleaning the electrolytic bath can be detected appropriately. The details thereof will be described herein later. When the cleaning timing is detected, the cleaning of the electrolytic bath is performed either automatically by the electrolyzed water generator or manually by the operator of the generator. For the cleaning, whichever of the reverse polarity cleaning and the chemical cleaning as mentioned above may be employed. Note that the reverse polarity cleaning is advantageous in that it can be done only with the elements included in the apparatus, such as the power supply unit, and on the other hand, the chemical cleaning is advantageous in that it can clean, in addition to the electrolytic bath, other places, such as water flow channels.

The control unit detects the cleaning timing, based on an integrated value of $C \cdot (i/f)$. The present inventor has found that there is a correlation between the integrated value and the amount of the scale formed in the electrolyzed water generator. Therefore, by using such an integrated value, the cleaning timing of the electrolytic bath is detected more appropriately.

The control unit detects the cleaning timing when an absolute value of the integrated value of $C \cdot (i/f)$ reaches or exceeds a predetermined threshold. The present inventor has found that scale is hardly formed until the absolute value of the integrated value reaches a predetermined threshold, and when the absolute value reaches or exceeds the predetermined threshold, the necessity of cleaning the electrolytic bath increases. The timing at which such an absolute value reaches or exceeds a predetermined threshold can be regarded as the timing of cleaning the electrolytic bath. The value of $C \cdot (i/f)$ can be a positive or negative value, depending on the operation mode of the electrolyzed water generator.

The control unit may be configured to control the power supply unit so as to perform a reverse polarity cleaning of the electrolytic bath when the cleaning timing is detected. According to this configuration, in the electrolyzed water generator, the reverse polarity cleaning of the electrolytic bath is automatically performed at an appropriate timing. Therefore, over-cleaning and insufficient cleaning can be avoided, which can easily suppress both the wear of the anode and the cathode, and the scale buildup on the anode and the cathode.

(Electrolyzed water generator control method)

An electrolyzed water generator control method according to the present disclosure is a method for controlling an electrolyzed water generator which includes at least a pair of an anode and a cathode, an electrolytic bath, and a power supply unit. The configurations of the pair of the anode and the cathode, the electrolytic bath, and the power supply unit may be the same as those described above. The control method includes steps (i) and (ii).

In the step (i), the power supply unit is controlled so as to produce cathode water in the cathode compartment and anode water in the anode compartment through electrolysis of raw water introduced into the electrolytic bath. This allows the user to utilize the cathode water or the anode water, as necessary.

In the step (ii), a cleaning timing at which the electrolytic bath is cleaned is detected, based on an integrated value of C·(i/f), given that a current applied during the electrolysis is denoted by i [A] and a flow rate of the raw water during the electrolysis is denoted by f [L/sec]. Here, the C is a constant, which, for example, may be determined analytically and/or experimentally based on the specific configuration of the electrolyzed water generator. By using the integrated value of C·(i/f), the timing of cleaning the electrolytic bath can be detected appropriately. When the cleaning timing is detected, the cleaning of the electrolytic bath is performed either automatically by the electrolyzed water generator or manually by the operator of the generator. For the cleaning, whichever of the reverse polarity cleaning and the chemical cleaning as mentioned above may be employed. The integrated value of C (i/f) is a value obtained by processing (integrating) the values of C·(i/f) determined at different timings.

As described above, according to the present disclosure, it is possible to clean the electrolytic bath of the electrolyzed water generator at an appropriate timing. Furthermore, according to the present disclosure, the following effects (1) to (3) can be obtained.

(1) By using the parameter (i/f), which has not been shown so far, optimal control related to the scale cleaning and removal can be realized, without depending on the hardness of the raw water or the mode of use, and regardless of the cultural lifestyle in domestic and overseas.

(2) Since the sensors conventionally installed in the electrolyzed water generator are used to acquire the values of the current and the flow rate during the electrolysis, the scale cleaning and removal at an appropriate timing can be realized, without introducing any additional device.

(3) Since the simple parameter (i/f) is used, rather than using huge and complicated data for each type of electrolyzed water (e.g., strong cathode water, medium cathode water, or weak cathode water) and for each flow rate when the apparatus is in use, the optimization of the timing for the scale cleaning and removal can be realized at low cost, without requiring a high-capacity microcomputer or the like to realize the control unit or control method of the present disclosure.

The present disclosure is based on the standpoint that the scale formation in an electrolyzed water generator is accelerated by the production of electrolyzed water, that is, by the electrolysis of raw water in an electrolytic bath. In other words, in the present invention, a parameter that influences and determines the calcium ion amount is directly measured, based on the perspective that the calcium ions migrated from the anode compartment into the cathode compartment during electrolysis act as a trigger of the formation of scale. Then, based on the parameter, the amount of the scale formed is determined, so that the scale can be cleaned and removed at an appropriate timing.

The cations, such as calcium ions and magnesium ions, migrate from the anode compartment through the diaphragm into the cathode compartment, and are bonded to the carbonate ions in the cathode compartment, thereby to form scale. Actually, scale is more often observed in the cathode compartment than in the anode compartment. This also proves the necessity to know the amount of ions, such as calcium ions and magnesium ions, having migrated into the cathode compartment.

A clue to know the amount of ions, such as calcium ions and magnesium ions, formed in the anode compartment and having migrated into the cathode compartment is in the Faraday's electrolysis law regarding electrolysis in electrolytic solution. The Faraday's law is basically based on the following formula (1).

[Math formula 1]

$$N \;=\; Q \diagup (z \cdot F) \qquad\qquad \cdots\;(1)$$

Here, N is an amount of the migrated ions [mol], z is an ionic valence, Q is a quantity of electricity [coulomb] = (i·t), and F is a Faraday constant [coulomb/mol], where i is an electrolysis current, i.e., an applied current [A], and t is an electrolysis time, i.e., an applied time [sec].

There is one obstacle when the formula (1) based on the Faraday's law of electrolysis regarding the amount of the migrated ions, such as calcium ions and magnesium ions, is applied to the electrolytic bath of an electrolyzed water generator. To be specific, the Faraday's electrolysis law is intended to apply to a static model, which is, for example, a solution placed in a certain container, whereas the solution in the electrolytic bath of the electrolyzed water generator is a dynamic model which flows with a certain flow rate for the duration of electrolysis. To address this, with a focus on the point that the Faraday's law of electrolysis is not restricted by the size and shape of the container, the present inventor has attempted an approach that enables the application of the above law to the electrolytic bath.

In order to apply the above approach to the formula (1), in the case of the electrolytic bath of the electrolyzed water generator, it is given that raw water having flowed at a flow rate f [L/sec] for the duration of electrolysis t [sec] is put in a certain virtual container, the volume thereof is expressed as (f·t) [L]. Therefore, by converting the amount of the migrated ions N [mol] per unit flow rate into an ion concentration M [mol/L], the following formula (2) is obtained.

[Math formula 2]

$$\begin{aligned} M &= N / (f \cdot t) \\ &= \{Q / (z \cdot F)\} / (f \cdot t) \\ &= \{1 / (z \cdot F)\} \cdot (i / f) \\ &= 1.04 \times 10^{-5} (i / zf) \qquad \cdots (2) \end{aligned}$$

The formula (2) shows the ion concentration of all ions including monovalent and divalent ions. When the ions are calcium ions or magnesium ions, whose ionic valence z = 2, the following formula (3) is obtained.

[Math formula 3]

$$M = 5.2 \times 10^{-6} (i / f) \qquad \cdots (3)$$

Strictly speaking, it can be said that the formula (3) represents the concentration or hardness of all divalent ions, such as magnesium ions, without limited to the calcium ions.

The formulae (2) and (3) deduced from the Faraday's law of electrolysis are new findings that have not been seen before. Its importance is in that it has been clarified that the amount of ions, such as calcium ions and magnesium ions, generated in the electrolytic bath when the electrolyzed water generator is in use can be simply and conveniently obtained only from the flow rate f and the applied current i.

The (i/f) in the formulae (2) and (3) represents a current applied per unit flow rate as a result, but the applied current and the flow rate are extremely important parameters for the control of the electrolyzed water generator. Many of the commercially available electrolyzed water generators are equipped with a flow sensor and a power supply. Therefore, it is an innovative finding that the (i/f) composed of the flow rate and the applied current, which can be obtained using these components, is an extremely dominant parameter for the development and the use of the electrolyzed water generator, and such a parameter can be determined without introducing a new device.

Although the scale formation phenomenon was not clarified by analyzing the relationship between the divalent ion concentration M (i.e., total hardness) and one of the applied current i and the flow rate f, it was easily clarified by making an analysis based on the formula (3). The amount of the calcium ions or magnesium ions migrated into the cathode compartment was not able to be known directly, but was able to be known unitarily from the amount of the calcium ions or magnesium ions decreased in the anode compartment. Important findings have been obtained, and as the same time, the usefulness of the formula (3) has been empirically proved. The details thereof will be described later in the description of Embodiment 1.

Total hardness is defined as the sum of the amounts of calcium ions and magnesium ions. However, in general, in raw water, such as tap water, miscellaneous ions are not much contained, and the calcium ion content is larger than the magnesium ion content. From the definition that hardness of water is expressed in terms of the amount of calcium carbonate, it is permissible to regard the amount of calcium ions as hardness, and the total hardness is often simply referred to as hardness. On the premise of these, in the present disclosure, the amount of calcium ions is simply measured by titration, and its concentration per unit volume is regarded as the total hardness or the total amount of scale.

As in Patent Literature 1, conventionally, the scale formation has been considered to be dependent on the hardness or the calcium ion concentration in the raw water. The present inventor has conducted an analysis using the (i/f) in the formula (3), with the hardness of the raw water and the conditions for current application varied variously. As a result, it has been empirically proved that the relationship between the scale formation and the C-(i/f) is not dependent on the hardness of the raw water or the calcium ion concentration. The details thereof will be described later in the description of Embodiments 1 and 2.

From the data of Embodiment 2 (described later), all the measurement plots converge into one straight line, and the following formula (4) was obtained.

[Math formula 4]

$$Mc = 1.6 \times 10^{-6} (i / f) \qquad \cdots (4)$$

That is, the formula (4) shows the concentration of the calcium ions having decreased in the anode compartment as a result of having migrated from the anode compartment into the cathode compartment, and shows the amount of the scale formed by the reaction of the migrated calcium ions and the carbonate ions in the cathode compartment. By using this information, it is possible to wash and remove the scale, without being influenced by the hardness of the raw water and without damaging the electrode plate before the scale is formed.

In the following, examples of the electrolyzed water generator and the electrolyzed water generator control method according to the present disclosure will be specifically described with reference to the drawings. The components and processes as described above can be applied to the components and processes of the below-described examples of the electrolyzed water generator and the electrolyzed water generator control method. The components and processes of the below-described examples of the electrolyzed water generator and the electrolyzed water generator control method can be modified based on the description above. The matters as described below may be applied to the above embodiments. The components and processes of the below-described examples of the electrolyzed water generator and the electrolyzed water generator control method, the components and processes which are not essential to the electrolyzed water generator and the electrolyzed water generator control method according to the present disclosure may be omitted. The figures below are schematic and not intended to accurately reflect the shape and the number of the actual members.

<<Embodiment 1>>

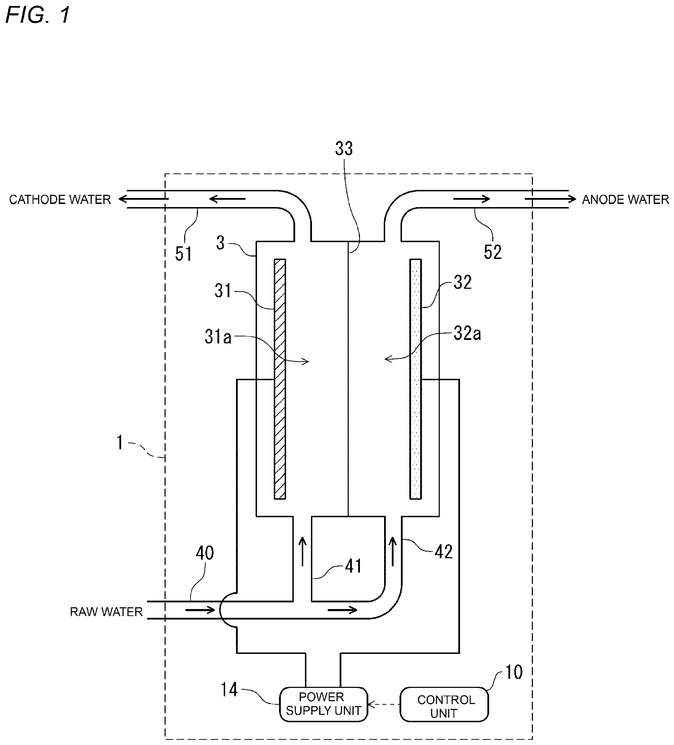

A description will be given below of Embodiment 1 of the present disclosure. As illustrated in FIG. 1, an electrolyzed water generator 1 of the present embodiment includes a pair of an anode 32 and a cathode 31, an electrolytic bath 3, a power supply unit 14, and a control unit 10. The electrolyzed water generator 1 further includes a water feed pipe 40, a cathode compartment water feed pipe 41, an anode compartment water feed pipe 42, a cathode compartment water spout pipe 51, and an anode compartment water spout pipe 52.

The pair of the anode 32 and the cathode 31 are each composed of an electrode plate. Each of the anode 32 and the cathode 31 may have a shaped of, for example, a rectangular plate-like shape, but not limited thereto.

The electrolytic bath 3 has an anode compartment 32a and a cathode compartment 31a separated from each other by a diaphragm 33. The anode 32 is housed in the anode compartment 32a. The cathode 31 is housed in the cathode compartment 31a. The electrolytic bath 3 of the present embodiment has one anode compartment 32a and one cathode compartment 31a. In the electrolytic bath 3, raw water is electrolyzed, so that cathode water is produced in the cathode compartment 31a, and anode water is produced in the anode compartment 32a. The diaphragm 33 has a function to allow the anions formed in the cathode compartment 31a to migrate into the anode compartment 32a, and allow the cations formed in the anode compartment 32a to migrate into the cathode compartment 31a.

The power supply unit 14 is an element for allowing current to flow between the anode 32 and the cathode 31 by applying a DC voltage thereacross. The power supply unit 14 is provided outside the electrolytic bath 3 and is connected to the anode 32 and the cathode 31.

The control unit 10 is an element for controlling the power supply unit 14. The control unit 10 is configured to control the power supply unit 14 so as to cause electrolysis of raw water introduced into the electrolytic bath 3, so that cathode water is produced in the cathode compartment 31a and anode water is produced in the anode compartment 32a. The control unit 10 detects a cleaning timing at which the electrolytic bath 3 is cleaned, when the absolute value of an integrated value of $C \cdot (i/f)$, where the C is a constant, reaches or exceeds a predetermined threshold, given that a current applied during the electrolysis is denoted by i [A] and a flow rate of the raw water during the electrolysis is denoted by f [L/sec]. The control unit 10, upon detecting the cleaning timing, controls the power supply unit 14 to perform a reverse polarity cleaning of the electrolytic bath 3.

The water feed pipe 40, the cathode compartment water feed pipe 41, and the anode compartment water feed pipe 42 are pipes for supplying raw water into the electrolytic bath 3. The water feed pipe 40 connects a supply source of raw water (e.g., water supply or well) to the cathode compartment water feed pipe 41 and the anode compartment water feed pipe 42. The cathode compartment water feed pipe 41 is connected to an inlet of the cathode compartment 31a. The anode compartment water feed pipe 42 is connected to an inlet of the anode compartment 32a.

The cathode compartment water spout pipe 51 and the anode compartment water spout pipe 52 are pipes for supplying the cathode water and the anode water produced in the electrolytic bath 3 to the outside. The cathode compartment water spout pipe 51 is connected to an outlet of the cathode compartment 31a. The anode compartment water spout pipe 52 is connected to an outlet of the anode compartment 32a.

- Measurement test using electrolyzed water generator -

The following measurement test was carried out using the above-described electrolyzed water generator 1. Specifically, raw water was supplied to the electrolyzed water generator 1, which was then electrolyzed with a constant current. The total hardness was measured at this time at the cathode compartment water spout pipe 51 and the anode compartment water spout pipe 52. This measurement was carried out, with the total hardness of the raw water, the applied current during the electrolysis, the flow rate of the raw water, and other conditions varied as appropriate. Here, the anode water and the cathode water that flowed respectively out of the cathode compartment water spout pipe 51 and the anode compartment spout pipe 52 were each sampled into a beaker for 1 minute, and the sampled water was measured with a measuring cylinder, to determine the total hardness. For the total hardness measurement, an automatic potentiometric titrator AT-710 (available from Kyoto Electronics Manufacturing Co., Ltd.) was used. As the power supply unit 14, a power supply PK60-20 (available from Matsusada Precision Inc.) was used.

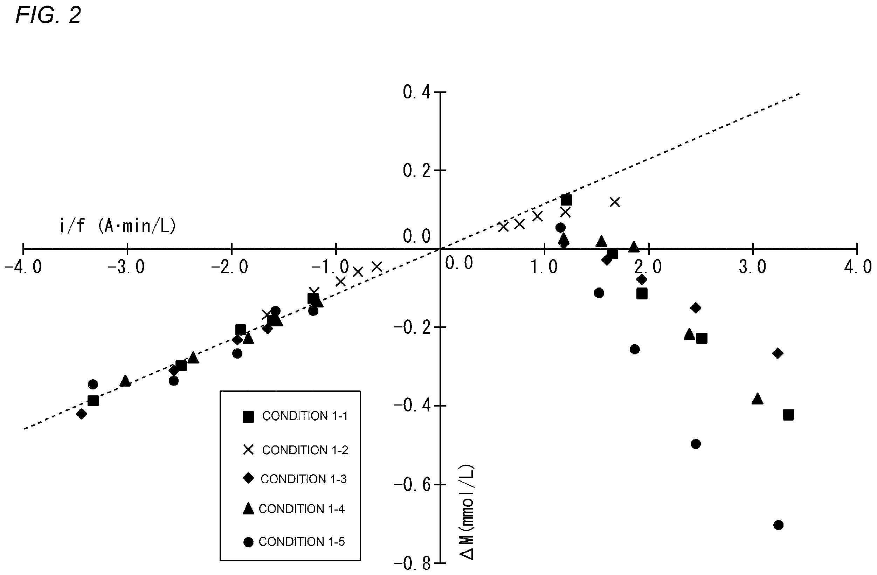

The conditions for the above measurement test are shown in Table 1, and the test results are shown in FIG. 2. In FIG. 2, the (i/f) values at the cathode are shown on the positive side, and those at the anode are shown on the negative side. In FIG. 2, the measured values under the condition 1-1 are each denoted by a black square with its diagonal lines extending diagonally. The measured values under the condition 1-2 are each denoted by a cross. The measured values under the condition 1-3 are each denoted by a black square with its diagonal lines extending vertically and horizontally. The measured values under the condition 1-4 are each denoted by a black triangle. The measured values under the condition 1-5 are each denoted by a black circle. In FIG. 2, with the raw water total hardness taken as a reference value, the vertical axis ($\Delta M$) represents a deviation from the reference value.

[Table 1]

|  | Raw water total hardness (mmol/L) | Applied current (A) | Flow rate at cathode (L/min) | Flow rate at anode (L/min) |
|---|---|---|---|---|
| Condition 1-1 | 2.09 | 1.0 | 0.30 | 0.30 |
|  |  |  | 0.40 | 0.40 |
|  |  |  | 0.52 | 0.52 |
|  |  |  | 0.61 | 0.62 |
|  |  |  | 0.83 | 0.81 |
| Condition 1-2 | 0.53 | 0.5 | 0.30 | 0.30 |
|  |  |  | 0.42 | 0.41 |
|  |  |  | 0.54 | 0.52 |
|  |  |  | 0.66 | 0.63 |
|  |  |  | 0.83 | 0.81 |
| Condition 1-3 | 1.31 | 1.0 | 0.31 | 0.29 |
|  |  |  | 0.41 | 0.39 |
|  |  |  | 0.52 | 0.51 |
|  |  |  | 0.63 | 0.60 |
|  |  |  | 0.85 | 0.83 |
| Condition 1-4 | 2.72 | 1.0 | 0.33 | 0.33 |
|  |  |  | 0.42 | 0.42 |
|  |  |  | 0.54 | 0.54 |
|  |  |  | 0.65 | 0.64 |
|  |  |  | 0.85 | 0.84 |
| Condition 1-5 | 3.87 | 1.0 | 0.31 | 0.30 |
|  |  |  | 0.41 | 0.39 |
|  |  |  | 0.54 | 0.51 |
|  |  |  | 0.66 | 0.63 |
|  |  |  | 0.87 | 0.81 |

The total hardness of the cathode water in the cathode compartment 31a was presumed to increase according to the formula (3). However, when the value of (i/f) had increased to some extent, it changed from an increase to a decrease. Whereas, the total hardness of the anode water in the anode compartment 32a decreased proportionally to the value of (i/f). This result seems to be inconsistent with the Faraday's law of electrolysis; however, when the anode compartment 32a and the cathode compartment 31a are taken unitarily, the results in Table 1 and FIG. 2 can be understood as follows based on the law of electrolysis.

As a result that the calcium ions (and magnesium ions) had migrated through the diaphragm 33 into the cathode compartment 31a, the calcium ion amount (and magnesium ion amount) decreased in the anode compartment 32a, whereas, in the cathode compartment 31a, the calcium ions (and magnesium ions) having migrated thereinto reacted with the carbonate ions having generated after a while in the cathode compartment 31a, and the calcium ion amount (and the magnesium ion amount) decreased. The calcium ion amount (and the magnesium ion amount) having decreased in the anode compartment 32a can be seen as equivalent to the calcium ion amount (and the magnesium ion amount) having migrated into the cathode compartment 31a.

The calcium ions (and magnesium ions) having migrated into the cathode compartment 31a react with carbonate ions to form calcium carbonate (and magnesium carbonate), that is, act as a trigger of the scale formation. Scale deposits and builds up over time. Therefore, based on the integrated value of the concentration of the migrated calcium ions (and magnesium ions), cleaning and removal by, for example, a reverse polarity cleaning or chemical cleaning can be performed at the optimum timing before the scale starts to build up. The integrated value of the calcium ion concentration cannot be unconditionally determined because it differs depending on the structure, material, and shape of the electrolytic bath 3, and is determined from the peculiarity of the electrolyzed water generator 1.

<<Embodiment 2>>

Embodiment 2 of the present disclosure will be described. The electrolyzed water generator 1 of the present embodiment differs from that of the above-described Embodiment 1, in that a plurality of pairs of anode 32 and cathode 31 are included. In the following, the difference from Embodiment 1 will be mainly described.

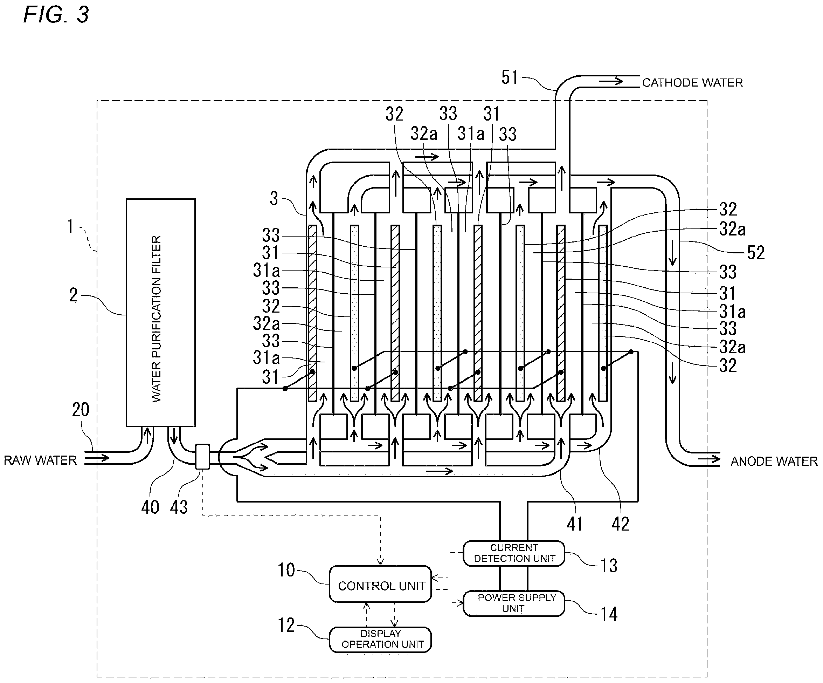

As illustrated in FIG. 3, the electrolyzed water generator 1 includes a plurality of pairs (seven pairs, in this example) of the anode 32 and the cathode 31, an electrolytic bath 3, a power supply unit 14, a current detection unit 13, a display operation unit 12, and a control unit 10. The electrolyzed water generator 1 further includes a water flow pipe 20, a water feed pipe 40, a cathode compartment water feed pipe 41, an anode compartment water feed pipe 42, a cathode compartment water spout pipe 51, and an anode compartment water spout pipe 52.

The anode 32 and the cathode 31 are each composed of an electrode plate. Each of the anode 32 and the cathode 31 may be have a shape, for example, a rectangular plate-like shape, but not limited thereto.

The electrolytic bath 3 has a plurality of (four, in this example) anode compartments 32a and a plurality of (four, in this example) cathode compartments 31a. The anode compartments 32a and the cathode compartments 31a are paired one to one. The paired anode and cathode compartments 32a and 31a are separated from each other by a diaphragm 33. One anode 32 is housed in each of the anode compartments 32a. One cathode 31 is housed in each of the cathode compartments 31a.

The power supply unit 14 is an element for allowing current to flow between the anode 32 and the cathode 31 by applying a DC voltage thereacross. The power supply unit 14 is connected to all of the anodes 32 and all of the cathodes 31.

The current detection unit 13 is an element for detecting a current flowing between the anode 32 and the cathode 31 during the electrolysis. The information on the current detected by the current detection unit 13 is transmitted to the control unit 10. The current detection unit 13 of the present embodiment is configured to detect currents flowing between the plurality of the anodes 32 and the plurality of the cathodes 31, that is, a total current supplied from the power supply unit 14 to the electrolytic bath 3. The current detection unit 13 may be configured to detect currents flowing between some of the anodes 32 and some of the cathodes 31.

The display operation unit 12 is an element for displaying an operating state of the electrolyzed water generator 1 and operating the electrolyzed water generator 1. The display operation unit 12 may be composed of, for example, a touch panel. The display operation unit 12 displays an operating state of the electrolyzed water generator 1, in response to a command from the control unit 10. The display operation unit 12, upon being operated by the user, transmits the operation information to the control unit 10.

The control unit 10 is an element for controlling the power supply unit 14. The control unit 10 detects a cleaning timing at which the electrolytic bath 3 is cleaned, when the absolute value of an integrated value of $C \cdot (i/f)$, where the C is a constant, reaches or exceeds a predetermined threshold, given that a current applied during the electrolysis (the aforementioned total current) is denoted by i [A] and a flow rate (total flow rate) of the raw water during the electrolysis is denoted by f [L/sec]. The control unit 10, upon detecting the cleaning timing, may notify the user of the information, or may control the power supply unit 14 to automatically perform a reverse polarity cleaning of the electrolytic bath 3. Also, the control unit 10 controls the display operation unit 12 to display an operating state of the electrolyzed water generator 1.

The water flow pipe 20, the water feed pipe 40, the cathode compartment water feed pipe 41, and the anode compartment water feed pipe 42 are pipes for supplying raw water into the electrolytic bath 3. The water flow pipe 20 and the water feed pipe 40 connect a supply source of raw water (e.g., water supply or well) to the cathode compartment water feed pipe 41 and the anode compartment water feed pipe 42. The cathode compartment water feed pipe 41 is connected to an inlet of each of the cathode compartments 31a. The anode compartment water feed pipe 42 is connected to an inlet of each of the anode compartments 32a.

A water purification filter 2 is provided between the water flow pipe 20 and the water feed pipe 40. The water feed pipe 40 is provided with a flow rate sensor 43. The water purification filter 2 contains, for example, activated carbon, which purifies the raw water having flowed thereinto through the water flow pipe 20, and sends the purified water into the water feed pipe 40. The flow rate sensor 43 detects the flow rate of the raw water flowing through the water feed pipe 40. The information on the flow rate detected by the flow rate sensor 43 is transmitted to the control unit 10.

The cathode compartment water spout pipe 51 and the anode compartment water spout pipe 52 are pipes for supplying the cathode water and the anode water produced in the electrolytic bath 3 to the outside. The cathode compartment water spout pipe 51 is connected to an outlet of each of the cathode compartments 31a. The anode compartment water spout pipe 52 is connected to an outlet of each of the anode compartments 32a.

- Electrolyzed water generator controlling method -

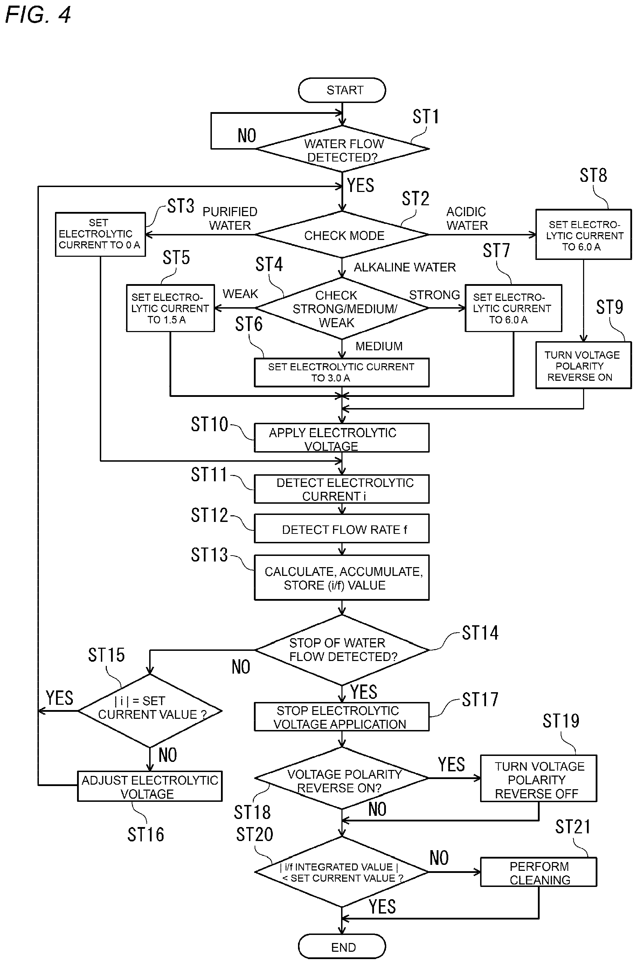

Next, a description will be given below of an example of an electrolyzed water generator controlling method according to the present disclosure, with reference to FIG. 4. According to the electrolyzed water generator controlling method, cleaning of the electrolytic bath 3 can be performed at an appropriate timing. The electrolyzed water generator controlling method includes steps 1 to 21 (ST1 to 21).

As illustrated in FIG. 4, in the step 1 (ST1), the presence or absence of water flow is checked. In the step 1, the control unit 10 may check the presence or absence of water flow, based on a detection signal from the flow rate sensor 43. If no water flow is detected (No, in step 1), the step 1 is repeated. If water flow is detected (Yes, in step 1), the process proceeds to the step 2.

In the step 2 (ST2), the mode of the electrolyzed water generator 1 is checked. In the step 2, the control unit 10 may check the mode of the electrolyzed water generation device 1, based on a signal from the display operation unit 12. If the electrolyzed water generator 1 is in a purified water mode, the process proceeds to the step 3. If the electrolyzed water generator 1 is in an alkaline water mode, the process proceeds to the step 4. If the electrolyzed water generator 1 is in an acidic water mode, the process proceeds to the step 8.

In the step 3 (ST3), the control unit 10 sets the electrolytic current (i.e., the applied current during electrolysis) to 0 A. After completing this setting, the process proceeds to the step 11.

In the step 4 (ST4), the intensity setting of the alkaline water mode is checked. In the step 4, the control unit 10 may check the intensity setting of the alkaline water mode, based on a signal from the display operation unit 12. If the intensity setting is in a weak setting, the process proceeds to step 5. If the intensity setting is in a medium setting, the process proceeds to the step 6. If the intensity setting is in a strong setting, the process proceeds to the step 7.

In the step 5 (ST5), the electrolytic current is set to 1.5 A. After completing this setting, the process proceeds to the step 10. The set value is merely an example, and the electrolytic current can be set to any value. This applies to the steps 6 to 8.

In the step 6 (ST6), the control unit 10 sets the electrolytic current to 3.0 A. After completing this setting, the process proceeds to the step 10.

In the step 7 (ST7), the control unit 10 sets the electrolytic current to 6.0 A. After completing this setting, the process proceeds to the step 10.

In the step 8 (ST8), the control unit 10 sets the electrolytic current to 6.0 A. After completing this setting, the process proceeds to the step 9.

In the step 9 (ST9), the control unit 10 sets a voltage polarity reverse mode to be turned ON. After completing this setting, the process proceeds to the step 10.

In the step 10 (ST10), an electrolytic voltage is applied. In the step 10, the control unit 10 may control the power supply unit 14 so as to apply a DC voltage across the anode 32 and the cathode 31, so that the electrolytic current set in the steps 5 to 8 flows therebetween. By controlling as above, cathode water is produced, and anode water is produced. The process then proceeds to the step 11.

In the step 11 (ST11), an electrolytic current i is detected. In the step 11, the control unit 10 may detect the electrolytic current i, based on a signal from the current detection unit 13. The process then proceeds to the step 12.

In the step 12 (ST12), a flow rate f is detected. In the step 12, the control unit 10 may detect the flow rate f, based on a signal from the flow rate sensor 43. The process then proceeds to the step 13.

In the step 13 (ST13), a value of (i/f) is calculated, and the calculated values are integrated and stored. In the step 13, the control unit 10 may calculate the value of (i/f), based on an electrolytic current i and a flow rate f detected in the steps 11 and 12. The control unit 10 integrates the calculated values and stores the integrated value. The process then proceeds to the step 14.

In the step 14 (ST14), whether or not the water flow has stopped is checked. In the step 14, the control unit 10 may check whether or not the water flow has stopped, based on the detection signal of the flow rate sensor 43. If the stop of the water flow is not detected (No, in step 14), the process proceeds to the step 15. If the stop of the water flow is detected (Yes, in step 14), the process proceeds to the step 17.

In the step 15 (ST15), the control unit 10 checks whether or not the electrolytic current i coincides with the set current value. Here, when the difference between the absolute value of the electrolytic current i and the set current value is smaller than a predetermined current threshold value, the electrolytic current i may be determined as coinciding with the set current value. If the electrolytic current i coincides with the set current value (Yes, in step 15), the process returns to the step 2. If the electrolytic current i does not coincide with the set current value (No, in step 15), the process proceeds to the step 16.

In the step 16 (ST16), the electrolytic voltage is adjusted. In the step 16, the control unit 10 may control the power supply unit 14 such that the electrolytic current i approaches the set current value. After completing this adjustment, the process returns to the step 2.

In the step 17 (ST 17), the application of the electrolytic voltage is stopped. In the step 17, the control unit 10 may control the power supply unit 14 so as to not to apply a voltage across the anode 32 and the cathode 31. The process then proceeds to the step 18.

In the step 18 (ST18), the control unit 10 checks whether or not the voltage polarity reverse mode is in ON state. If the reverse mode is in ON state (Yes, in step 18), the process proceeds to the step 19. If the reverse mode is in OFF state (No, in step 18), the process proceeds to the step 20.

In the step 19 (ST19), the control unit 10 sets the voltage polarity reverse mode to be turned OFF. After completing this setting, the process proceeds to the step 20.

In the step 20 (ST20), the control unit 10 determines whether or not the absolute value of the integrated value of (i/f) is smaller than the set value (i.e., the predetermined threshold). In this case, the constant C in the present disclosure is 1. The constant C, however, can be set to any value. If the absolute value is equal to or greater than the set value (No, in step 20), the cleaning timing of the electrolytic bath 3 is detected, and the process proceeds to the step 21. If the absolute value is smaller than the set value (Yes, in step 20), the series of controls end.

In the step 21 (ST21), cleaning of the electrolytic bath 3 is performed. In the step 21, the control unit 10 may control the power supply unit 14 so as to automatically perform a reverse polarity cleaning of the electrolytic bath 3. After completing the cleaning, the series of controls end. The step 21 may be a step of notifying the user of the cleaning timing of the electrolytic bath 3 detected by the control unit 10, to allow the user to instruct the start of the reverse polarity cleaning of the electrolytic bath 3 (or, to turn on the switch for starting the reverse polarity cleaning).

- Measurement test using electrolyzed water generator -

The following measurement test was carried out using the above-described electrolyzed water generator 1. Specifically, raw water was supplied to the electrolyzed water generator 1, which was then electrolyzed with a constant current. The calcium ion concentration was measured at this time at the cathode compartment water spout pipe 51 and the anode compartment water spout pipe 52. This measurement was carried out, with the calcium ion concentration in the raw water, the applied current during the electrolysis of the raw water, the flow rate of the raw water, and other conditions varied as appropriate. Here, the anode water and the cathode water that flowed respectively out of the cathode compartment water spout pipe 51 and the anode compartment spout pipe 52 were each sampled into a beaker for 1 minute, and the sampled water was measured with a measuring cylinder, to determine the calcium ion concentration. For the calcium ion concentration measurement, an automatic potentiometric titrator AT-710 (available from Kyoto Electronics Manufacturing Co., Ltd.) was used. As the power supply unit 14, a power supply PK60-20 (available from Matsusada Precision Inc.) was used.

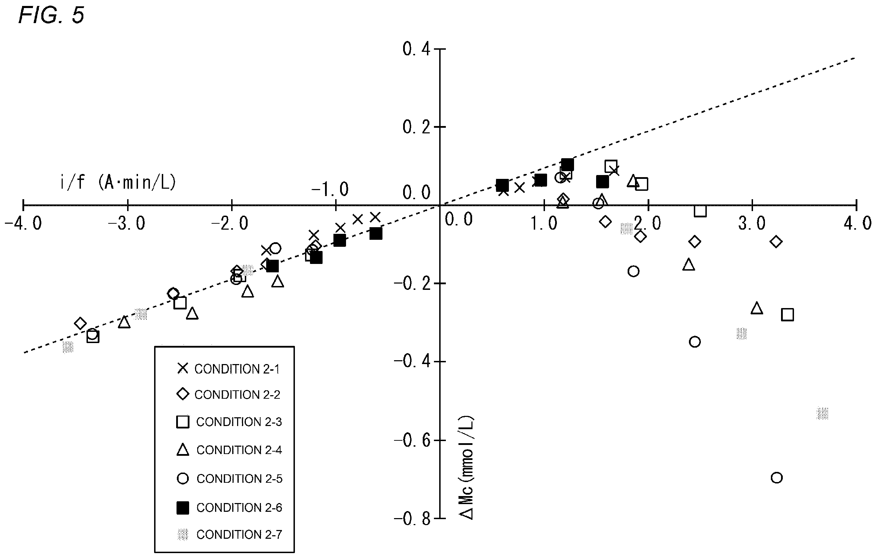

The conditions for the above measurement test are shown in Table 2, and the test results are shown in FIG. 5. In FIG. 5, the (i/f) values at the cathode are shown on the positive side, and those at the anode are shown on the negative side. In FIG. 5, the measured values under the condition 2-1 are each denoted by a cross. The measured values under the condition 2-2 are each denoted by a white square with its diagonal lines extending vertically and horizontally. The measured values under the condition 2-3 are each denoted by a white square with its diagonal lines extending diagonally. The measured values under the condition 2-4 are each denoted by a white triangle. The measured values under the condition 2-5 are each denoted by a white circle. The measured values under the condition 2-6 are each denoted by a black square. The measured values under the condition 2-7 are each denoted by a square with dot hatching. In FIG. 5, with the calcium ion concentration in raw water as a reference value, the vertical axis ($\Delta$Mc) represents a deviation from the reference value.

[Table 2]

| | Ca ion concentration in raw water (mmol/L) | Applied current (A) | Flow rate at cathode (L/min) | Flow rate at anode (L/min) |
|---|---|---|---|---|
| Condition 2-1 | 0.34 | 1.5 | 0.90 | 0.90 |
| | | | 1.26 | 1.23 |
| | | | 1.62 | 1.56 |
| | | | 1.98 | 1.89 |
| | | | 2.49 | 2.43 |
| Condition 2-2 | 0.94 | 3.0 | 0.93 | 0.87 |
| | | | 1.23 | 1.17 |
| | | | 1.56 | 1.53 |
| | | | 1.89 | 1.80 |
| | | | 2.55 | 2.49 |
| Condition 2-3 | 1.59 | 3.0 | 0.90 | 0.90 |
| | | | 1.20 | 1.20 |
| | | | 1.56 | 1.56 |
| | | | 1.83 | 1.86 |
| | | | 2.49 | 2.43 |
| Condition 2-4 | 2.05 | 3.0 | 0.99 | 0.99 |
| | | | 1.26 | 1.26 |
| | | | 1.62 | 1.62 |
| | | | 1.95 | 1.92 |
| | | | 2.55 | 2.52 |
| Condition 2-5 | 2.98 | 3.0 | 0.93 | 0.90 |
| | | | 1.23 | 1.17 |
| | | | 1.62 | 1.53 |
| | | | 1.98 | 1.89 |
| | | | 2.61 | 2.43 |
| Condition 2-6 | 1.54 | 1.5 | 0.96 | 0.93 |
| | | | 1.23 | 1.26 |
| | | | 1.56 | 1.56 |
| | | | 2.52 | 2.43 |
| Condition 2-7 | 1.54 | 4.5 | 0.96 | 0.93 |
| | | | 1.23 | 1.26 |
| | | | 1.56 | 1.56 |
| | | | 2.52 | 2.43 |

As can be seen from FIG. 5, the measurement results obtained in Embodiment 2 were similar to those in Embodiment 1. The discussion made in Embodiment 1 also applies to these measurement results. In FIG. 5, the plots of each condition converged into one approximate straight line (indicated by a broken line in FIG. 5), and from the inclination of the line, the aforementioned formula (4) was obtained.

The concentration of all ions in the total current is expressed by the formula (2), and when based on the total hardness of the divalent ions, it is expressed by the formula (3). Here, the formulae (2) and (3) are theoretical formulae. On the other hand, the formula (4) is an empirical formula obtained in the electrolyzed water generator 1 of Embodiment 2, on the basis of the formula (3). The theoretical formula (3) is understood to be similar to the formula representing the total hardness, and is of high importance at the time of developing the electrolyzed water generator 1, whereas the empirical formula (4) is a formula unique to the electrolyzed water generator 1, and is of high importance at the time of commercially releasing the generator. In any case, the total hardness and the calcium ion concentration represented by the approximate straight lines respectively in FIGS. 2 and 5 were evaluated to be about 30% of the total current, and there was no significant difference between the two.

[Examples]

It was experimentally examined whether the cathode 31 was appropriately cleaned or not, in the electrolyzed water generators 1 shown below of Examples 1 and 2 and Comparative Examples 1 and 2.

«Example 1»

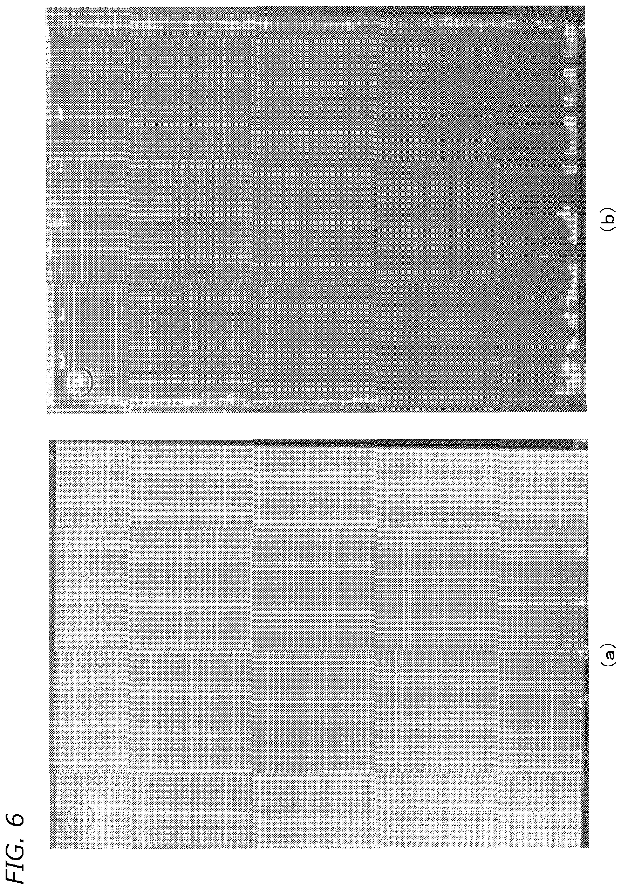

In the electrolyzed water generator 1 having the structure of Embodiment 2, a program for executing the control method described with reference to FIG. 4 was stored in the control unit 10, so that the reverse polarity cleaning of the electrolytic bath 3 was performed according to the program. With the total hardness of the raw water introduced into the electrolytic bath 3 set to 80 mg/L, it was determined from the state of the scale at the cathode 31 after 20 hours of use and from the thickness of the platinum plating on the cathode 31, whether or not cleaning was performed appropriately. The breakdown of 20 hours of use was as follows: use of 6 to 7 min/day and 25 to 35 L/day was repeated every day for half a year. The amount of water having flowed for the 20 hour use was about 4800 L. The photograph of the cathode 31 after the test of the present Example is shown in FIG. 6(a). As can be seen from the figure, the surface of the cathode 31 was free of scale, and the original platinum surface of the electrode was exposed from the surface, which was in a good condition. In addition, no decrease in platinum plating thickness was observed. From the foregoing, it was confirmed that appropriate scale cleaning was performed, without over-cleaning or insufficient cleaning.

«Example 2»

The total hardness of the raw water introduced into the electrolytic bath 3 was set to 200 mg/L. The amount of water having flowed for the 20 hour use was about 6500 L.
The conditions other than the above were the same as in Example 1. As a result, the surface of the cathode 31 was free of scale, and no decrease in the platinum plating thickness was observed. From the foregoing, it was confirmed that appropriate scale cleaning was performed, without over-cleaning or insufficient cleaning.

<<Comparative Example 1»

In the electrolyzed water generator 1 having the structure of Embodiment 2, the reverse polarity cleaning of the electrolytic bath 3 was performed at a fixed time cycle (15-min cycle). The conditions other than the above were the same as in Example 1. The photograph of the cathode 31 after the test of the present Comparative Example is shown in FIG. 6(b). As can be seen from the figure, the surface of the cathode 31 still had scale mostly around the upstream portion (lower part of the photograph). Although no decrease in platinum plating thickness was observed, it was confirmed that the cleaning was insufficient. It can be inferred that the cleaning cycle (15-minute cycle) was longer than that for optimum control in the present Comparative Example.

<<Comparative example 2>>

In the electrolyzed water generator 1 having the structure of Embodiment 2, the reverse polarity cleaning of the electrolytic bath 3 was performed at a fixed time cycle (15-min cycle). The conditions other than the above were the same as in Example 2. As a result, although the surface of the cathode 31 was free of scale, a decrease in the platinum plating thickness was observed (a decrease from 0.15 $\mu$m on average to 0.14 $\mu$m on average). From the forgoing , it was confirmed that the cleaning was overly performed in the present Comparative Example. It can be inferred that the cleaning cycle (15-minute cycle) was shorter than that for optimum control in the present Comparative Example.
From the test results of each Example and each Comparative Example, it was confirmed that according to the technique of the present disclosure, the scale cleaning and removal can be performed at an appropriate timing, regardless of the hardness of the raw water and the mode of use.

Although the present invention has been described in terms of the presently preferred embodiments, it is to be understood that such disclosure is not to be interpreted as limiting, and the scope of protection is defined in the appended claims.

Various alterations and modifications will no doubt become apparent to those skilled in the art to which the present invention pertains, after having read the above disclosure.

[Industrial Applicability]

The present disclosure is applicable for an electrolyzed water generator and a control method for an electrolyzed water generator.

[Reference Signs List]

1: electrolyzed water generator
10: control unit
12: display operation unit
13: current detection unit
14: power supply unit
2: water purification filter
20: water flow pipe
3: electrolytic bath
31: cathode
31a: cathode compartment
32: anode
32a: anode compartment
33: diaphragm
40: water feed pipe
41: cathode compartment water feed pipe
42: anode compartment water feed pipe
43: flow rate sensor
51: cathode compartment water spout pipe
52: anode compartment water spout pipe

**Claims**

1.  An electrolyzed water generator (1), comprising:

    at least a pair of an anode (32) and a cathode (31);
    an electrolytic bath (3) having an anode compartment (32a) and a cathode compartment (31a) separated from each other by a diaphragm (33), with the anode (32) housed in the anode compartment (32a), and the cathode (31) housed in the cathode compartment (31a);
    a power supply unit (14) for allowing current to flow between the anode (32) and the cathode (31); and
    a control unit (10) for controlling the power supply unit (14),
    the control unit (10) being configured to control the power supply unit (14) so as to cause electrolysis of raw water introduced into the electrolytic bath (3), so that cathode water is produced in the cathode compartment (31a) and anode water is produced in the anode compartment (32a), wherein
    the control unit (10) detects a cleaning timing at which the electrolytic bath (3) is cleaned, based on an integrated value of $C \cdot (i/f)$, where the C is a constant, given that a current applied during the electrolysis is denoted by i [A] and a flow rate of the raw water during the electrolysis is denoted by f [L/sec], and
    the control unit (10) detects the cleaning timing when an absolute value of the integrated value reaches or exceeds a predetermined threshold.

2.  The electrolyzed water generator (1) according to claim 1, wherein the control unit (10), upon detecting the cleaning timing, controls the power supply unit (14) to perform a reverse polarity cleaning of the electrolytic bath (3).

3. A method for controlling an electrolyzed water generator (1) which includes

at least a pair of an anode (32) and a cathode (31),
an electrolytic bath (3) having an anode compartment (32a) and a cathode compartment (31a) separated from each other by a diaphragm (33), with the anode (32) housed in the anode compartment (32a), and the cathode (31) housed in the cathode compartment (31a), and
a power supply unit (14) for allowing current to flow between the anode (32) and the cathode (31), the method comprising steps of:

(i) controlling the power supply unit (14) so as to cause electrolysis of raw water introduced into the electrolytic bath (3), so that cathode water is produced in the cathode compartment (31a) and anode water is produced in the anode compartment (32a); and
(ii) detecting a cleaning timing at which the electrolytic bath (3) is cleaned, based on an integrated value of $C \cdot (i/f)$, where the C is a constant, given that a current applied during the electrolysis is denoted by i [A] and a flow rate of the raw water during the electrolysis is denoted by f [L/sec]; wherein

in the step of (ii), the cleaning timing is detected when an absolute value of the integrated value reaches or exceeds a predetermined threshold.

4. The method for controlling an electrolyzed water generator (1) according to claim 3, further comprising a step of (iii) upon detecting the cleaning timing, performing a reverse polarity cleaning of the electrolytic bath (3).

## Patentansprüche

1. Generator für elektrolysiertes Wasser (1), umfassend:

mindestens ein Paar einer Anode (32) und einer Kathode (31);
ein elektrolytisches Bad (3), das einen Anodenraum (32a) und einen Kathodenraum (31a) aufweist, die durch eine Membran (33) voneinander getrennt sind, wobei die Anode (32) in dem Anodenraum (32a) untergebracht ist, und die Kathode (31) in dem Kathodenraum (31a) untergebracht ist;
eine Leistungsversorgungseinheit (14) zum Ermöglichen, dass ein Strom zwischen der Anode (32) und der Kathode (31) fließt; und
eine Steuereinheit (10) zum Steuern der Leistungsversorgungseinheit (14),
wobei die Steuereinheit (10) konfiguriert ist, um die Leistungsversorgungseinheit (14) zu steuern, um eine Elektrolyse von Rohwasser zu bewirken, das in das elektrolytische Bad (3) eingeführt wird, sodass Kathodenwasser in dem Kathodenraum (31a) erzeugt wird und Anodenwasser in dem Anodenraum (32a) erzeugt wird, wobei
die Steuereinheit (10) einen Reinigungszeitpunkt erfasst, bei dem das elektrolytische Bad (3) gereinigt wird, basierend auf einem integrierten Wert von $C \cdot (i/f)$, wobei das C eine Konstante ist, vorausgesetzt, dass ein Strom, der während der Elektrolyse angelegt wird, mit i [A] bezeichnet wird und eine Durchflussrate des Rohwassers während der Elektrolyse mit f [L/s] bezeichnet wird, und
die Steuereinheit (10) den Reinigungszeitpunkt erfasst, wenn ein Absolutwert des integrierten Werts eine vorbestimmte Schwelle erreicht oder überschreitet.

2. Generator für elektrolysiertes Wasser (1) nach Anspruch 1, wobei die Steuereinheit (10) bei dem Erfassen des Reinigungszeitpunkts die Leistungsversorgungseinheit (14) steuert, um eine Reinigung mit umgekehrter Polarität des elektrolytischen Bads (3) durchzuführen.

3. Verfahren zum Steuern eines Generators für elektrolysiertes Wasser (1), der einschließt:

mindestens ein Paar einer Anode (32) und einer Kathode (31),
ein elektrolytisches Bad (3), das einen Anodenraum (32a) und einen Kathodenraum (31a) aufweist, die durch eine Membran (33) voneinander getrennt sind, wobei die Anode (32) in dem Anodenraum (32a) untergebracht ist, und die Kathode (31) in dem Kathodenraum (31a) untergebracht ist und
eine Leistungsversorgungseinheit (14) zum Ermöglichen, dass ein Strom zwischen der Anode (32) und der Kathode (31) fließt, das Verfahren umfassend die Schritte:

(i) Steuern der Leistungsversorgungseinheit (14), um eine Elektrolyse von Rohwasser zu bewirken, das in das elektrolytische Bad (3) eingeführt wird, sodass Kathodenwasser in dem Kathodenraum (31a) erzeugt wird und Anodenwasser in dem Anodenraum (32a) erzeugt wird; und

(ii) Erfassen eines Reinigungszeitpunkts, bei dem das elektrolytische Bad (3) gereinigt wird, basierend auf einem integrierten Wert von C·(i/f), wobei das C eine Konstante ist, vorausgesetzt, dass ein Strom, der während der Elektrolyse angelegt wird, mit i [A] bezeichnet wird und eine Durchflussrate des Rohwassers während der Elektrolyse mit f [L/s] bezeichnet wird; wobei

in dem Schritt (ii) der Reinigungszeitpunkt erfasst wird, wenn ein Absolutwert des integrierten Werts eine vorbestimmte Schwelle erreicht oder überschreitet.

4. Verfahren zum Steuern eines Generators für elektrolysiertes Wasser (1) nach Anspruch 3, ferner umfassend einen Schritt (iii) bei dem Erfassen des Reinigungszeitpunkts, des Durchführens einer Reinigung mit umgekehrter Polarität des elektrolytischen Bads (3).

**Revendications**

1. Générateur d'eau électrolysée (1), comprenant :

au moins une paire d'une anode (32) et d'une cathode (31) ;
un bain électrolytique (3) ayant un compartiment anodique (32a) et un compartiment cathodique (31a) séparés l'un de l'autre par un diaphragme (33), avec l'anode (32) logée dans le compartiment anodique (32a), et la cathode (31) logée dans le compartiment cathodique (31a) ;
une unité d'alimentation en énergie (14) pour permettre à un courant de s'écouler entre l'anode (32) et la cathode (31) ; et
une unité de commande (10) pour commander l'unité d'alimentation électrique (14),
l'unité de commande (10) étant configurée pour commander l'unité d'alimentation électrique (14) de manière à provoquer l'électrolyse d'eau brute introduite dans le bain électrolytique (3), de sorte que l'eau de cathode est produite dans le compartiment cathodique (31a) et l'eau anodique est produite dans le compartiment anodique (32a), dans lequel
l'unité de commande (10) détecte un moment de nettoyage auquel le bain électrolytique (3) est nettoyé, sur la base d'une valeur intégrée de C (i/f), où le C est une constante, étant donné qu'un courant appliqué lors de l'électrolyse est désigné par i [A] et un débit de l'eau brute lors de l'électrolyse est noté f [L/sec], et
l'unité de commande (10) détecte le moment de nettoyage lorsqu'une valeur absolue de la valeur intégrée atteint ou dépasse un seuil prédéterminé.

2. Générateur d'eau électrolysée (1) selon la revendication 1, dans lequel l'unité de commande (10), lors de la détection du moment de nettoyage, commande l'unité d'alimentation électrique (14) pour effectuer un nettoyage de polarité inverse du bain électrolytique (3).

3. Procédé de commande d'un générateur d'eau électrolysée (1) qui comporte

au moins une paire d'une anode (32) et d'une cathode (31),
un bain électrolytique (3) ayant un compartiment anodique (32a) et un compartiment cathodique (31a) séparés l'un de l'autre par un diaphragme (33), avec l'anode (32) logée dans le compartiment anodique (32a), et la cathode (31) logée dans le compartiment cathodique (31a), et
une unité d'alimentation électrique (14) pour permettre à un courant de s'écouler entre l'anode (32) et la cathode (31), le procédé comprenant les étapes de :

(i) commander l'unité d'alimentation électrique (14) de manière à provoquer l'électrolyse d'eau brute introduite dans le bain électrolytique (3), de sorte que l'eau de cathode est produite dans le compartiment cathodique (31a) et l'eau anodique est produite dans le compartiment anodique (32a) ; et
(ii) la détection d'un moment de nettoyage auquel le bain électrolytique (3) est nettoyé, sur la base d'une valeur intégrée de C (i/f), où le C est une constante, étant donné qu'un courant appliqué lors de l'électrolyse est noté i [A] et un débit de l'eau brute lors de l'électrolyse est noté f [L/sec] ; dans lequel

dans l'étape (ii), le moment de nettoyage est détecté lorsqu'une valeur absolue de la valeur intégrée atteint ou dépasse un seuil prédéterminé.

4. Procédé de commande d'un générateur d'eau électrolysée (1) selon la revendication 3, comprenant en outre une étape (iii) lors de la détection du moment de nettoyage, le fait d'effectuer un nettoyage de polarité inverse du bain électrolytique (3).

FIG. 1

FIG. 2

*FIG. 3*

EP 4 137 463 B1

## FIG. 4

FIG. 5

EP 4 137 463 B1

*FIG. 6*

(a)

(b)

## REFERENCES CITED IN THE DESCRIPTION

**Patent documents cited in the description**

- JP 3465367 B
- JP H06165983 A
- JP H08173964 A